# EUROPEAN PATENT SPECIFICATION

(11) **EP 3 685 083 B1**
(45) Date of publication and mention of the grant of the patent: **30.08.2023**
(21) Application number: 18797097.5
(22) Date of filing: 14.09.2018
(51) Int. Cl.: F16L 5/00, E04G 21/18, F16L 23/08

(54) **PUDDLE FLANGE**
MAUERFLANSCH
BRIDE D'ÉTANCHÉITÉ

(30) Priority: 14.09.2017 PT 2017110289
(43) Date of publication of application: 29.07.2020
(73) Proprietor: FUCOLI-SOMEPAL FUNDIÇÃO DE FERRO, S.A., 3000-125 Coimbra (PT)
(72) Inventor: CRAVINHO SANTOS, Bruno Ricardo, 3000-125 Coimbra (PT)
(74) Representative: Patentree
(86) International application number: PCT/IB2018/057081
(87) International publication number: WO 2019/053660

(56) References cited:
- DE-A1- 19 703 463
- US-B1- 7 625 017
- Saint Gobain ET AL: "Product Data Sheet ED078 - Puddle Flanges General Description Multi-Clamp & Standard Puddle", , 30 September 2014 (2014-09-30), pages 1-1, XP055525272, Retrieved from the Internet: URL:http://www.luckinslive.com/data/46a328 e1-9a61-4ae5-aefe-910f8f61cb90/30cca9d1-af 20-41c4-adb1-0a55e1eab4e5.PDF [retrieved on 2018-11-20]
- Frischhut.De: "Produkt-Katalog Product Catalogue", Ludwig FRISCHHUT GmbH & Co.KG, 30 October 2016 (2016-10-30), pages 86-87, XP055525329, Retrieved from the Internet: URL:http://www.frischhut.de/index.php?fris chhut-downloads-katalog-poster [retrieved on 2018-11-20]

## Description

### FIELD OF INVENTION

The present subject-matter discloses a puddle flange for laying and blocking elongate shaped parts, pipes, lines and/or cables with a circular cross section within the walls of equipment, housings or components provided with walls made of materials like concrete or other materials used in areas like construction.

In particular, the puddle flange of the present disclosure may be used to seal around the outside of pipes that are required to pass through concrete structures.

### BACKGROUND

There are documents disclosing apparatus with the objective of blocking cylindrical members passing through structural elements like walls, but none of them has the ability of providing a satisfactory tethering effect, which has in consideration the irregularities that cylindrical elements normally have, in terms of shape and diameter asymmetries.

Document WO2015021959A1 discloses an apparatus which can immobilize the cylindrical element passing through the wall, by fixing the apparatus to the wall. This apparatus it is not efficient to block the rotational and longitudinal movements of the cylindrical element inside the wall, as the element of the flange contacting the cylindrical element is a sealing-press contour which has a very weak blocking effect. Although this feature of the flange allows small variations of the diameter and asymmetries of the cylindrical element, it still fails on blocking the cylindrical element and has also the inconvenience of being applied outside the wall and exposed to the environmental conditions, like corrosion and other side effects.

Document GB1566641A discloses an apparatus which makes a water tight seal between an elongated cylindrical member and a chamber wall through which the cylindrical member extends. This apparatus is not efficient to block the rotational and longitudinal movements of the cylindrical element inside the wall, as the shape of the surface of contact of the flange with the cylindrical element to be blocked is also cylindrical and smooth. This feature of the flange makes it inefficient in blocking the cylindrical element, mostly because it does not allow small variations of the diameter and asymmetries of the cylindrical element. However, it is suitable to be applied under water but not as a blocking element.

Document JPH1181664A discloses an apparatus with a similar blocking inability of the cylindrical member as performed by the apparatus presented on patent GB1566641A. However, this apparatus is suitable to be embedded inside concrete instead of water. Despite the fact of being suitable to be used inside concrete, it is also inefficient on blocking the rotational and longitudinal movements of the cylindrical element inside. As in case of the apparatus of patent GB1566641A, this feature is also related to the cylindrical shape and smoothness of inner surface of the flange. Document DE19703463A1 also discloses a puddle flange comprising two separable half-flanges for fixation in concrete structure.

None of the apparatus presented in the prior art can solve the problem of blocking the cylindrical member efficiently by fixing it to a wall and prevent it from the damage of being exposed to the environmental conditions.

These facts are disclosed in order to illustrate the technical problem addressed by the present disclosure.

### GENERAL DESCRIPTION

One of the major problems of the flanges existing in the market for laying and blocking elongate shaped parts, pipes, lines and/or cables with a circular cross section passing through walls, is the inability to fix efficiently the cylindrical element to the wall and take in consideration the natural small variations of the shape and dimensions of the cylindrical element, while enabling on-site adjustment of the placement along the pipe. It is also important to prevent the degradation of the flange due to the exposition to the environmental conditions.

The subject matter of the invention is a puddle flange according to the technical features of claim 1. Advantageous embodiments of the invention form the subject matter of the dependent claims.

The present subject-matter discloses a flange suitable for blocking and fixing a cylindrical member to structural elements like concrete walls and for solving the problem of blocking the cylindrical element in an efficient and adjustable way. Also, it is important to prevent the damage of the exposition to the environmental conditions.

The disclosed flange is suitable for blocking and tethering a cylindrical member at an adjustable placement. This flange is especially adapted to be applied inside the wall and allows the cylindrical member to have minor differences on its shape and diameter without jeopardizing the ability of the flange to block relative to a wall.

The flange is composed of two separable co-planar half-flanges, each one having a omega shape (Ω), they connect each other in the meeting tabs with screws which are co-planar with the thus formed flange. The screws are substantially longer but less than half of the outer diameter of the flange and the cavities for the screws, which are on the two lateral tabs of both half-flanges, which are slightly shorter than the screws to allow them to be properly tightened. These features improve substantially the mechanical strength of the flange.

Advantageously,
each half-flange has two lateral faces and an internal and external face, wherein the lateral face is longer than the internal and external faces, in order to create a 'beam' between said tabs to produce a blocking force between them towards the pipe.

In an embodiment, the puddle-flange allows the adjustment to one existent cylindrical element or one that has already been installed. When the flange is mounted on the cylindrical element to be blocked, it has the shape of a disc with a substantial thickness around the cylindrical element and perpendicular to the longitudinal axis of the cylindrical element. Both half-flanges have a surface of contact with the cylindrical element which tends to be circular but it is also discontinuous as it has indents similar to steps with a rectangular shape and/or smoothed ramp transitions between steps. In the direction perpendicular to the plane of the flange, the indents have a profile which is circular shaped. In the direction perpendicular to the plane of the flange, the profile is rectangular, smoothed on the edges and the surface to contact with the element to be blocked has ridges in the middle of the thickness of the flange. The ridges and the discontinuities of the surface of the flange designed to contact with the cylinder element are very important as it improves the blocking effect and allows the existence of irregularities on the shape and diameter of the cylindrical element.

Both half-flanges have external edges with indents which are circularly shaped and have smoothed transitions. Besides the external edges, the half-flanges also have indents on both faces which may have a rectangular profile when seen in the radial direction of the flange when considering the flange as a disc. Both types of indents are adequate to block the flange, namely inside concrete to prevent the rotation of the flange in the axial direction. When the flange is properly mounted on the cylindrical element, the flange is efficiently blocked to the wall and the flange is also capable of blocking in an efficient way the cylindrical element. So, it can be concluded that the flange is able to work as an efficient apparatus to fix the cylindrical element to the wall. The mentioned indents of the half-flanges also allow to save material without losing the mechanical strength and the flange thus becomes lighter.

The flange is suitable to be used inside concrete because it is conceived to improve the efficiency of the blocking effect inside the concrete and it is also conceived to tolerate the natural variations in shape and diameter of the cylindrical element and when inside the concrete, the flange is protected against the degradation of the flange due to the exposition to the environmental conditions.

It is disclosed a puddle flange comprising two separable co-planar omega-shaped half-flanges for blocking a cylindrical member defining an axis, at a perpendicular angle to said axis,
each half-flange comprising two tabs each at an end of the respective half-flange, said tabs being shaped for receiving screws for coupling said half-flanges together, wherein each half-flange has an internal face for contacting with the cylindrical member, wherein the cross-section height, as measured transverse to said internal face, of each half-flange, is larger than the cross-section width, as measured parallel to said internal face, of said internal face.

In an embodiment, the cross-section height, transverse to said internal face, of each half-flange, is shaped such that the half-flange acts as a beam between the respective half-flange tabs for applying a blocking force to the cylindrical member.

In an embodiment, said half-flanges are shaped to act as a beam between the respective half-flange tabs for applying a blocking force to the cylindrical member by indents in said internal face.

In an embodiment, said tabs are configured such that the puddle-flange is adjustable to a previously available cylindrical element.

In an embodiment, said internal face comprises internal indents for blocking against said cylindrical member.

In an embodiment, said internal indents are shaped radially in respect of said cylindrical member, in said internal face, for biting against said cylindrical member.

In an embodiment, the internal indents are recesses defining a recessed half-flange shape that has a convex curve in the axial direction and a concave curve in the circumferential direction.

In an embodiment, the internal indents are recesses defining a recessed half-flange shape that has a concave circular curve in the circumferential direction having a radius that is smaller than the radius of the outer surface of the cylindrical member.

In an embodiment, the external indents are recesses defining a recessed half-flange shape that has a convex curve in the axial direction and a concave curve in the circumferential direction.

In an embodiment, each said half-flange comprises external ridges for concrete fixation.

In an embodiment, said external ridges are located radially in respect of said cylindrical member and externally in respect of each said half-flange.

In an embodiment, a lateral face of each half-flange comprises a surface depression.

An embodiment comprises screws and corresponding hex nuts for tightening said screws.

In an embodiment, the puddle flange is in cast iron.

In an embodiment, the surface of the puddle flange is rugose.

In an embodiment, said tabs have a reinforced cross-section in respect of the rest of the respective half-flange.

### BRIEF DESCRIPTION OF THE DRAWINGS

The following figures provide preferred embodiments for illustrating the description and should not be seen as limiting the scope of invention.

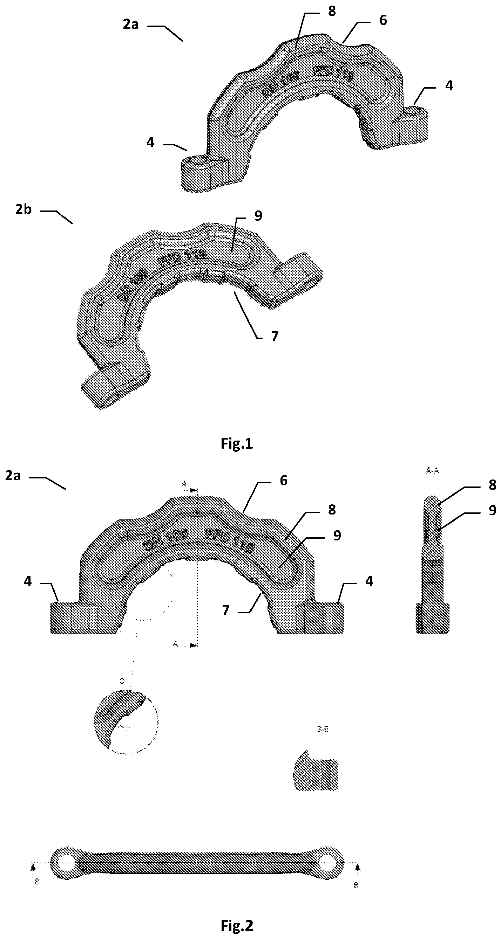

**Fig. 1** illustrates two half-flanges of an embodiment of the puddle flange.
**Fig. 2** illustrates an embodiment of a half-flange with the hole screws and the indents that allow to accommodate the irregularities of the shape and diameter of the cylindrical element.

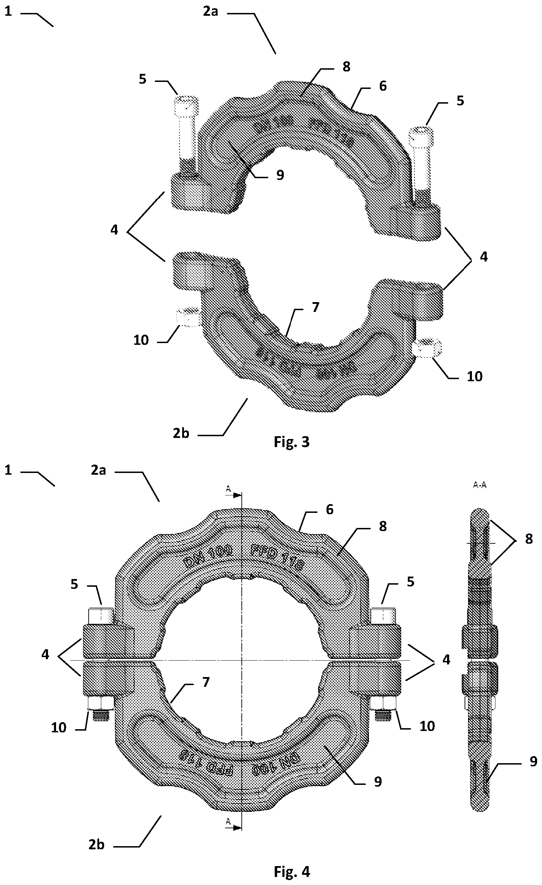

**Fig. 3** illustrates an embodiment of the puddle flange having two half-flanges, wherein each half-flange has coplanar sections that allow the coupling of the two flanges with screws and hex-nuts.
**Fig. 4** illustrates an embodiment of the puddle flange having two half-flanges coupled together.

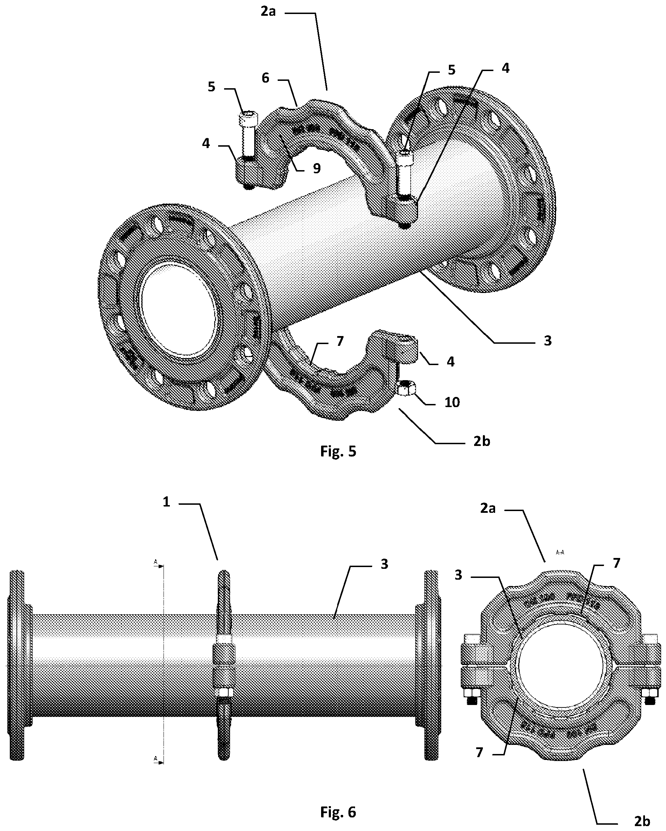

**Fig. 5** illustrates the placement of an embodiment of the puddle flange having two half-flanges for coupling to a cylindrical tube.
**Fig. 6** illustrates an embodiment of the puddle flange having two half-flanges coupled with the cylinder tube.

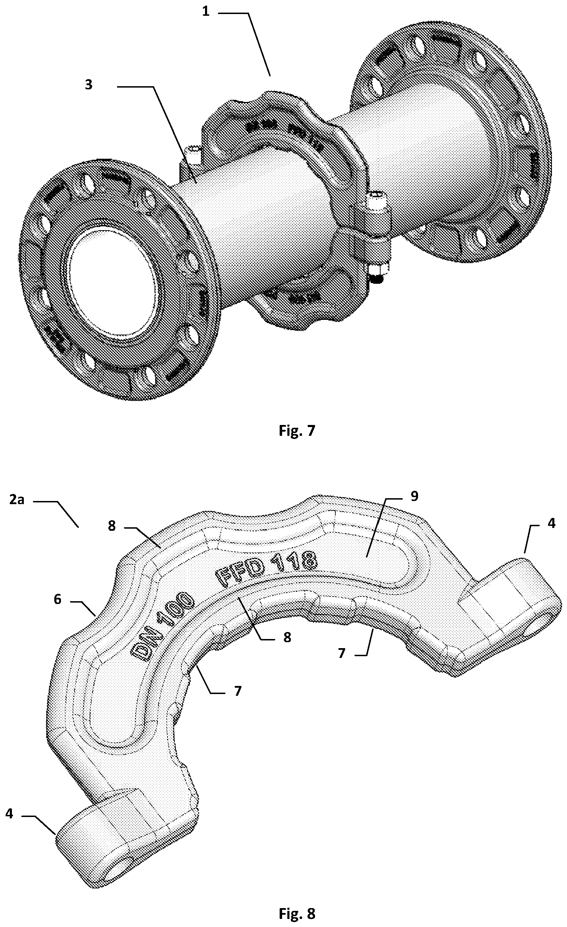

**Fig. 7** illustrates an example of application of an embodiment of the puddle flange having two half-flanges coupled with the cylinder with screws and hex-nuts.
**Fig. 8** illustrates an embodiment of a half-flange.

### DETAILED DESCRIPTION

The present invention relates to a puddle flange **1** comprising two separable co-planar omega-shaped half-flanges **2a, 2b** for blocking a cylindrical member **3** defining an axis, each half-flange **2a, 2b** comprising two tabs **4** each at an end of the half-flange **2a, 2b,** said tabs **4** being configured for receiving screws **5** for coupling said half-flanges **2a, 2b** together, wherein each half-flange **2a, 2b** has two lateral faces and an internal and external face, wherein the lateral face is higher than the internal and external face.

In an embodiment, the puddle flange of the present invention may further comprise a cross section identical to the rectangular cross-section of one beam, wherein their height is higher than their width to offer a higher transverse resistance.

In an embodiment,the puddle flange of the present invention may further comprise external indents **6** for fixation to concrete.

In an embodiment of the puddle flange of the present invention, said external indents **6** may be located radially in the external face to said half-flanges **2a, 2b.**

In an embodiment,the puddle flange of the present invention may further comprise internal indents **7** for fixation to the cylindrical member.

In an embodiment of the puddle flange of the present invention, said internal indents **7** may be located radially in the internal face to said half-flanges **2a, 2b** for contacting and arrest the cylindrical member **3** wherein said internal indents guarantee the fixation by biting the cylindrical member.

In an embodiment,the puddle flange of the present invention may further comprise external ridges **8** for fixation to concrete.

In an embodiment of the puddle flange of the present invention, the external ridges **8** may be located radially and externally to said half-flanges **2a, 2b.**

In an embodiment of the puddle flange of the present invention, the lateral face of each half-flange **2a**, **2b** may comprise a surface depression **9.**

In an embodiment,the puddle flange of the present invention may further comprise screws **5** and corresponding hex nuts **10** for tightening said screws **5.**

In an embodiment of the puddle flange of the present invention, the surface of the puddle flange **1** is rugose for guaranteeing friction with the concrete.

## Claims

1. Puddle flange (1) comprising two separable omega-shaped half-flanges (2a, 2b), the half-flanges being coplanar when mounted for blocking a cylindrical member (3), defining an axis, at a perpendicular angle to said axis, wherein said cylindrical member is a pipe, each half-flange comprising two tabs (4) each at an end of the respective half-flange, said tabs being shaped for receiving screws (5) for coupling said half-flanges together, wherein
each half-flange has an internal face for contacting with the cylindrical member, wherein a cross-section height, as measured transverse to said internal face, of each half-flange, is larger than a cross-section width, as measured parallel to said internal face, of said internal face,
each half-flange comprising external indents (6) for concrete fixation, wherein said external indents are located radially in respect of said cylindrical member, in an external face of each said half-flange opposite to the respective internal face.

2. Puddle flange according to the previous claim, wherein the cross-section height, transverse to said internal face, of each half-flange, is shaped such that the half-flange acts as a beam between the respective half-flange tabs for applying a blocking force to the cylindrical member.

3. Puddle flange according to any of the previous claims, wherein one or both said half-flanges are shaped to act as a beam between the respective half-flange tabs for applying a blocking force to the cylindrical member by indents in said internal face.

4. Puddle flange according to any of the previous claims wherein said internal face comprises internal indents (7) for blocking against said cylindrical member.

5. Puddle flange according to any of the previous claims wherein said tabs protrude radially from the omega-shape ends of each half-flange and have screw holes for receiving screws arranged tangentially to the circumference of said cylindrical member.

6. Puddle flange according to any of the previous claims wherein said tabs are configured such that the puddle-flange is adjustable to the cylindrical element.

7. Puddle flange according to claim 4 wherein the internal indents are shaped radially in respect of said cylindrical member, in said internal face, for biting against said cylindrical member.

8. Puddle flange according to the previous claim wherein the internal indents are recesses defining a recessed half-flange shape that has a convex curve in the axial direction and a concave curve in the circumferential direction.

9. Puddle flange according to claims 7 or 8 wherein the internal indents are recesses defining a recessed half-flange shape that has a concave circular curve in the circumferential direction having a radius that is smaller than the radius of the outer surface of the cylindrical member.

10. Puddle flange according to claim 1 wherein the external indents are recesses defining a recessed half-flange shape that has a convex curve in the axial direction and a concave curve in the circumferential direction.

11. Puddle flange according to any of the previous claims wherein each said half-flange comprises external ridges (8) for concrete fixation, said external ridges being located radially in respect of said cylindrical member and externally in respect of each said half-flange.

12. Puddle flange according to any of the previous claims wherein a lateral face of each half-flange comprises a surface depression (9).

13. Puddle flange according to any of the previous claims wherein said puddle flange is made in cast iron, in particular the surface of the puddle flange is rugose.

14. Puddle flange according to any of the previous claims, wherein said tabs have a reinforced cross-section when compared to the rest of the respective half-flange.

## Patentansprüche

1. Mauerflansch (1), umfassend zwei trennbare, omegaförmige Halbflansche (2a, 2b), wobei die Halbflansche in der gleichen Ebene liegen, wenn sie zum Blockieren eines zylindrischen Elements (3), das eine Achse definiert, in einem senkrechten Winkel zu der genannten Achse montiert werden, wobei das genannte zylindrische Element ein Rohr ist, wobei jeder Halbflansch jeweils an einem Ende des jeweiligen Halbflansches zwei Hülsen (4) aufweist, wobei die genannten Hülsen zur Aufnahme von Schrauben (5) zum Verbinden der genannten Halbflansche miteinander geformt sind, wobei jeder Halbflansch eine Innenfläche für den Kontakt mit dem zylindrischen Element aufweist,
wobei eine quer zur genannten Innenfläche gemessene Querschnittshöhe jedes Halbflansches größer als eine parallel zur Innenfläche gemessene Querschnittsbreite der genannten Innenfläche ist,
wobei jeder Halbflansch äußere Einkerbungen (6) zur Fixierung von Beton aufweist, wobei die genannten äußeren Einkerbungen radial in Bezug auf das genannte zylindrische Element in einer Außenfläche zu jedem genannten Halbflansches gegenüber der entsprechenden Innenfläche angeordnet sind.

2. Mauerflansch nach dem vorangehenden Anspruch, wobei die quer zur genannten Innenfläche angeordnete Querschnittshöhe jedes Halbflansches so geformt ist, dass der Halbflansch als Träger zwischen den entsprechenden Hülsen der Halbflansche wirkt, um eine Blockierkraft auf das zylindrische Element auszuüben.

3. Mauerflansch nach einem der vorangehenden Ansprüche, wobei einer oder beide der genannten Halbflansche so geformt sind, dass sie als Träger zwischen den entsprechenden Hülsen der Halbflansche wirken, um durch Einkerbungen in der genannten Innenfläche eine Blockierkraft auf das zylindrische Element auszuüben.

4. Mauerflansch nach einem der vorhergehenden Ansprüche, wobei die genannte Innenfläche innere Einkerbungen (7) zur Blockierung des zylindrischen Elements aufweist.

5. Mauerflansch nach einem der vorangehenden Ansprüche, wobei die genannten Hülsen radial von den omegaförmigen Enden jedes Halbflansches vorstehen und Schraubenlöcher zur Aufnahme von tangential zum Umfang des zylindrischen Elements angeordneten Schrauben aufweisen.

6. Mauerflansch nach einem der vorangehenden Ansprüche, wobei die genannten Hülsen so gestaltet sind, dass der Mauerflansch an das zylindrische Element anpassbar ist.

7. Mauerflansch nach Anspruch 4, bei dem die inneren Einkerbungen radial in Bezug auf das zylindrische Element in der Innenfläche geformt sind, um in das zylindrische Element einzuschneiden.

8. Mauerflansch nach dem vorangehenden Anspruch, wobei die inneren Einkerbungen Aussparungen sind, die eine zurückgesetzte Form eines Halbflansches bilden, die eine konvexe Kurve in der axialen Richtung und eine konkave Kurve in der Umfangsrichtung aufweist.

9. Mauerflansch nach Anspruch 7 oder 8, wobei die inneren Einkerbungen Aussparungen sind, die eine zurückgesetzte Form eines Halbflansches bilden, die eine konkave kreisförmige Kurve in der Umfangsrichtung mit einem Radius aufweist, der kleiner ist als der Radius der Außenfläche des zylindrischen Elements.

10. Mauerflansch nach Anspruch 1, wobei die äußeren Einkerbungen Aussparungen sind, die eine zurückgesetzte Form eines Halbflansches bilden, die eine konvexe Kurve in der axialen Richtung und eine konkave Kurve in der Umfangsrichtung aufweist.

11. Mauerflansch nach einem der vorangehenden Ansprüche, wobei jeder Halbflansch äußere Rippen (8) zur Fixierung von Beton aufweist, wobei die äußeren Rippen radial in Bezug auf das zylindrische Element und außen in Bezug auf jeden Halbflansch angeordnet sind.

12. Mauerflansch nach einem der vorangehenden Ansprüche, wobei eine Seitenfläche jedes Halbflansches eine Vertiefung (9) in der Oberfläche aufweist.

13. Mauerflansch nach einem der vorangehenden Ansprüche, wobei der genannte Mauerflansch aus Gusseisen hergestellt ist, wobei insbesondere ist die Oberfläche des Mauerflansches rau ist.

14. Mauerflansch nach einem der vorangehenden Ansprüche, wobei die genannten Hülsen im Vergleich zum Rest des jeweiligen Halbflansches einen verstärkten Querschnitt aufweisen.

## Revendications

1. Bride d'étanchéité (1) comprenant deux demi-brides en forme d'oméga séparables (2a, 2b), les demi-brides étant coplanaires lorsqu'elles sont assemblées pour bloquer un membre cylindrique (3), définissant un axe, à un angle perpendiculaire audit axe, dans lequel ledit membre cylindrique est un tuyau,
chaque demi-bride comprenant deux attaches (4) chacune à une extrémité de la demi-bride respective, lesdites attaches étant formées pour recevoir des vis (5) pour accoupler lesdites demi-brides ensemble, dans laquelle chaque demi-bride a une face interne pour être en contact avec le membre cylindrique,
dans laquelle une hauteur de section transversale, telle que mesurée de manière transversale par rapport à ladite face interne, de chaque demi-bride est plus large qu'une largeur de section transversal, telle que mesurée parallèlement à ladite face interne de ladite face interne,
chaque demi-bride comprenant des encoches externes (6) pour la fixation de béton, dans laquelle lesdites encoches externes sont situées radialement par rapport audit membre cylindrique, dans une face externe de chacune desdites demi-brides opposées à la face interne respective.

2. Bride d'étanchéité selon la revendication précédente, dans laquelle la hauteur de section transversale, transversale à ladite face interne, de chaque demi-bride, est formée de manière que la demi-bride agisse en tant que poutre entre les attaches de demi-bride respectives pour appliquer une force de blocage sur le membre cylindrique.

3. Bride d'étanchéité selon l'une quelconque des revendications précédentes, dans laquelle une ou plusieurs desdites demi-brides sont formées de manière à agir en tant que poutre entre les attaches de demi-bride respectives pour appliquer une force de blocage sur le membre cylindrique à travers des encoches dans ladite face interne.

4. Bride d'étanchéité selon l'une quelconque des revendications précédentes, dans laquelle ladite face interne comprend des encoches internes (7) pour bloquer contre ledit membre cylindrique.

5. Bride d'étanchéité selon l'une quelconque des revendications précédentes, dans laquelle lesdites attaches dépassent radialement des extrémités en forme d'oméga de chaque demi-bride et ont des trous de vis pour recevoir des vis arrangées tangentiellement à la circonférence dudit membre cylindrique.

6. Bride d'étanchéité selon l'une quelconque des revendications précédentes, dans laquelle lesdites attaches sont configurées telles que la bride d'étanchéité soit ajustable à l'élément cylindrique.

7. Bride d'étanchéité selon la revendication 4, dans laquelle les encoches internes sont formées radialement par rapport audit membre cylindrique, dans ladite face interne, pour mordre ledit membre cylindrique.

8. Bride d'étanchéité selon la revendication précédente, dans laquelle les encoches internes sont des renfoncements définissant une forme de demi-bride renfoncée qui a une courbe convexe dans la direction axiale et une courbe concave dans la direction circonférentielle.

9. Bride d'étanchéité selon les revendications 7 ou 8, dans laquelle les encoches internes sont des renfoncements définissant une forme de demi-bride renfoncée qui a une courbe circulaire concave dans la direction circonférentielle ayant un rayon qui est plus petit que le rayon de la surface extérieure du membre cylindrique.

10. Bride d'étanchéité selon la revendication 1, dans laquelle les encoches internes sont des renfoncements définissant une forme de demi-bride renfoncée qui a une courbe convexe dans la direction axiale et une courbe concave dans la direction circonférentielle.

11. Bride d'étanchéité selon l'une quelconque des revendications précédentes, dans laquelle chaque demi-bride comprend des stries externes (8) pour la fixation de béton, lesdites stries externes étant situées radialement par rapport audit membre cylindrique et de manière externe par rapport à chacune desdites demi-brides.

12. Bride d'étanchéité selon l'une quelconque des revendications précédentes, dans laquelle une face latérale de chaque demi-bride comprend une dépression de surface (9).

13. Bride d'étanchéité selon l'une quelconque des revendications précédentes, dans laquelle ladite bride d'étanchéité est faite en fonte, la surface de la bride d'étanchéité étant, en particulier, rugueuse.

14. Bride d'étanchéité selon l'une quelconque des revendications précédentes, dans laquelle lesdites attaches ont une section transversale renforcée en comparaison avec le reste des demi-brides respectives.
